Europäisches Patentamt

European Patent Office

Office européen des brevets

(19)

(11) **EP 0 687 105 B1**

(12)

# EUROPEAN PATENT SPECIFICATION

(45) Date of publication and mention
of the grant of the patent:
**04.03.1998 Bulletin 1998/10**

(51) Int Cl.$^6$: **H04N 5/14**

(21) Application number: **95108075.3**

(22) Date of filing: **26.05.1995**

(54) **A method for detecting motion in a video signal**

Verfahren zum Detektieren einer Bewegung in einem Videosignal

Procédé pour détecter le mouvement dans un signal vidéo

(84) Designated Contracting States:
**DE FR GB IT**

(30) Priority: **10.06.1994 FI 942751**

(43) Date of publication of application:
**13.12.1995 Bulletin 1995/50**

(73) Proprietor: **NOKIA TECHNOLOGY GmbH**
**75175 Pforzheim (DE)**

(72) Inventor: **Salonen, Jouni**
**FIN-33820 Tampere (FI)**

(56) References cited:
**EP-A- 0 550 231       EP-A- 0 551 040**
**EP-A- 0 565 948**

• **IEEE TRANSACTIONS ON CONSUMER
ELECTRONICS, vol. 39, no. 3, August 1993 NY,
US, pages 234-240, R. SIMONETTI ET AL. 'A
deinterlacer for IQTV receivers and multimedia
applications'**

**Description**

The invention relates to a method for detecting motion in a video signal between two successive cophasal fields, using two field memories.

Motion is a relative concept: motion is proportional to the position of the observer with respect to the object. If the position of the observer with respect to the object remains unchanged, then the object is not moving in relation to the observer. On the other hand, if the position of the object changes with respect to the observer, then the object is moving. Motion and, hence, detecting motion correctly, play a crucial part in processing a video signal.

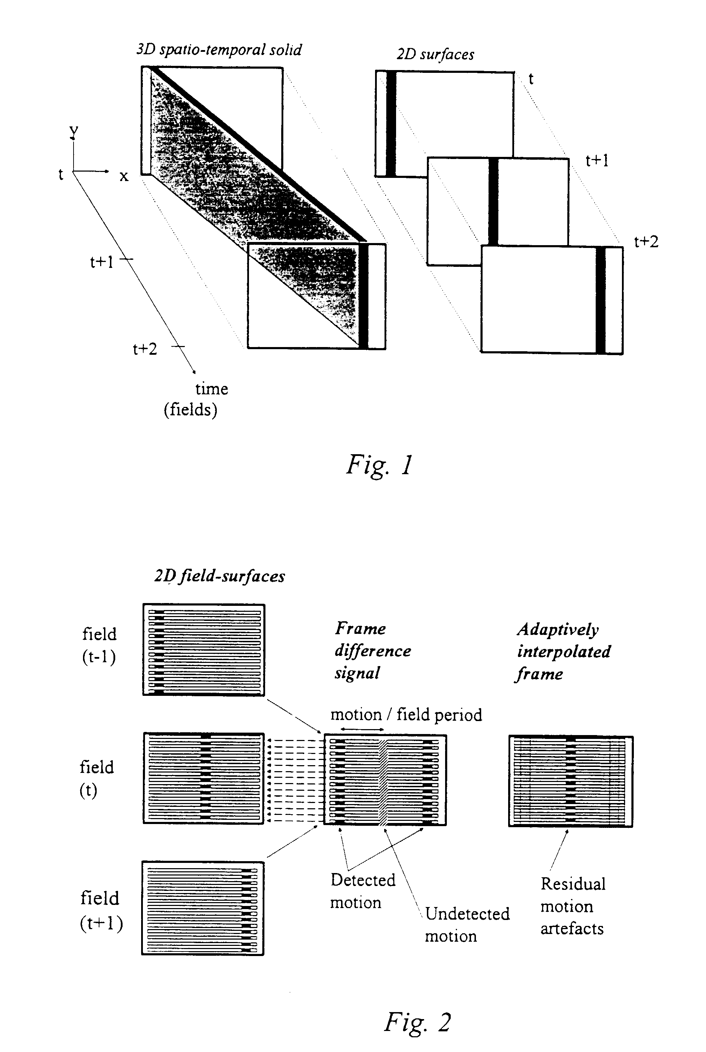

The left part of Figure 1 illustrates horizontal motion of a thin vertical bar in 3-dimensional space as a function of x, y and t coordinates. The third spatial coordinate z remains zero all the time since the motion takes place on a plane with respect to the observer. In an analog, continuous form the motion draws an uninterrupted track in space as depicted in the figure; it corresponds to the interpretation of motion by the eye and brain. The right part of Figure 1 illustrates the sampling of the motion. The uninterrupted motion track becomes a sequence of samples of 2-dimensional projection planes. This shows that motion detection is also closely related to the processing of video signals.

Many image improvement algorithms are preferably designed adaptive to motion: if there is local movement in the image, it is advantageous to process the image spatially, whilst in a non-moving location temporal processing will yield a better result. The objective is of course simplicity of implementation and reliability of detection. The purpose of motion detection is only to find the moving parts of an image, not to estimate the direction and extent of the motion, which is done in motion estimation. We may take the difference signal (absolute difference and thresholding or equality of the most significant bits) between two successive images as a starting point for motion detection. If there is motion in the image, it probably produces a great difference in the luminance value at the location of movement - in static locations the luminance is likely to remain unchanged. However, a signal between successive fields of an interlaced video signal is not suitable for a difference signal since these fields are spatially from different locations. Therefore, a difference signal has to be formed across an image so that it is possible to compare pixels of the same location. Such pixel-specific signal across an image is also called a local movement detector. Those so-called motion detectors that are not based on this local movement detector, but which attempt to detect motion from successive fields at different locations, are not really motion detectors at all.

In most cases, detectors operating with a one-field memory attempt to detect a horizontal edge from successive fields since motion produces in an interlaced signal a strong combing effect, in which the teeth of the comb are caused by the motion. An obvious disadvantage in this detection is that it cannot distinguish a stationary horizontal edge from an edge caused by motion, because horizontal edges have a high vertical frequency, about 288 c/aph. Therefore, all high vertical frequencies are considered moving, which causes clearly visible errors. For example, in an interlaced-to-progressive conversion (IPC) a "motion detector" like the one described above has no advantage over basic median filters, as median filters automatically detect horizontal edges.

Let us next consider motion detection in connection with the IPC. It is known that in a non-moving part of an image it pays to perform the interpolation temporally: e.g. by repeating the pixel from the preceding field at the same location. In a moving part it pays to perform the interpolation spatially, by means of the pixels inside the field. This is described in more detail with reference to Figure 2.

The left part of Figure 2 shows parts of three successive fields on top of each other in which it is shown a scanned vertical bar moving horizontally from left to right. It is assumed that the missing lines of the field (t) have to be interpolated. Then the motion information corresponding to the missing lines is formed from the lines of the preceding field (t-1) and the next field (t+1) (motion = black, static = white). The position of the bar in the field (t-1) produces a high difference signal in the left edge and, correspondingly, the position of the bar in the field (t+1) produces a high difference signal in the right edge of the image. The difference signal is represented by the field in the middle. The position of the bar in the field (t) is, however, not detected. When according to the difference signal it is interpolated new lines between the lines in the field t, the result is the rightmost field in the figure. It is seen that the interpolation leaves obvious errors in the image: the interpolation should produce a continuous black bar at the center instead of a broken one.

In fact, the problematic situation described above is in no way limited to a vertical bar moving horizontally, but all those locations in the field (t) in which the moving object is not during the field (t-1) or field (t+1) are left undetected. The problem is caused by a sampling frequency too low. The problem can be partly solved by adding one field memory to the system and calculating the difference signal from the field (t) to field (t-2). However, there is the problem that one more field memory makes the method unsuitable for current televisions with one frame memory (= 2 field memories). Furthermore, even a second difference signal will not guarantee fully reliable detection.

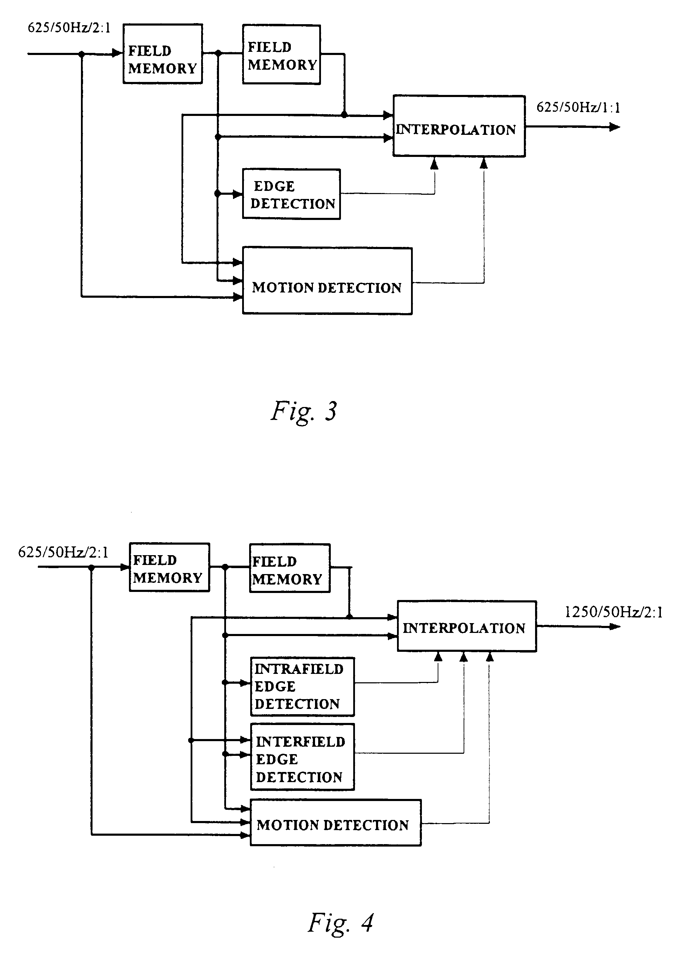

Figure 3 shows a block diagram of a known motion adaptive IPC method in which an interlaced PAL signal is converted to a non-interlaced one. It uses two field memories, an interpolator block, edge detector and a motion detector. At moving locations interpolation is done spatially according to the edge information calculated by the edge detector, and in static locations interpolation is done temporally by copying the pixel from the preceding field. The edge information may be formed e.g. with a method according to the patent application FI-916195 (corresponding to EP-A-550231), but another intra-field method will also do. In this case, the interpolation of static locations requires no additional information, and it is done temporally in a fixed manner with pixel repetition, for example.

Figure 4 is a block diagram of an NDHD (normal to high definition) conversion. It is an improved version of the arrangement according to Figure 3 presented in the patent application FI-923808 (corresponding to EP-A-584662), including now both motion detection and edge detections - one for moving and one for static regions. The edge detection and interpolation for static regions may be performed e.g. with a method according to the patent application FI-921676 (corresponding to EP-A-565948); correspondingly, the method of the patent application FI-923808 is suitable for moving regions. Another method comprising both motion detection and edge detection is disclosed in the publication of IEEE Transactions on Consumer Electronics, vol. 39, no. 3, August 1993, NY, US, pages 234-240 : "A deinterlacer for IQTV receivers and multimedia applications" by R. Simonetti et al.

The arrangements according to Figures 3 and 4 are just examples of motion adaptive applications using motion detection, but other image improvement applications, too, can benefit from the motion information; e.g. noise suppression, elimination of cross errors.

It is a disadvantage of the known methods described above that motion detection is performed between successive fields. It has been found that the detection requires at least two field memories to function satisfactorily. By increasing the number of field memories the detection can be improved, but due to the price of the memories it is an expensive solution. This invention is a new motion detection method that requires no more than two field memories but has proved to be quite efficient.

It is characteristic of the invention that a difference signal across an image which defines the minimum motion region is expanded horizontally using edge information calculated from two successive fields. So, the edge detector is based on a thresholded difference signal between successive odd or even-numbered fields defining the minimum motion region, and on a controlled horizontal expansion of the minimum motion region according to horizontal edges. Indefinite motion regions are smoothed in the motion information post-processing.

It is possible to have only two field memories and yet achieve a good result, if one little compromise is accepted: that horizontal static edges near to motion, but not, however, single horizontal edges, are interpreted moving.

The method comprises the following phases:

a) It is found in the difference signal across the image the locations that exceed a certain threshold value. These locations are interpreted moving, and they are called moving pixels.

b) It is found in an image forming two successive fields the horizontal edge locations. Here, edges produced by motion as well as real horizontal edges are detected as edges. These locations are called edge pixels.

c) The motion region is expanded according to the moving and edge pixels as follows: It is counted the number of moving pixels on one line in the region x-$v$, ..., x+$v$. In addition, it is counted the number of edge pixels in the region x-$u$, ..., x+$u$. A suitable value for $v$ is about 15 and for $u$, about 2. If simultaneously the number of moving pixels and the number of edge pixels is greater than a preset value, e.g. 1, the pixel is interpreted moving.

d) Improvement of motion information is performed through post-processing.

Below, the invention is described with reference to the enclosed drawings where

Figure 1    illustrates continuous and sampled motion,
Figure 2    illustrates the movement of a thin vertical bar in the fields,
Figure 3    shows a block diagram of a motion adaptive IPC conversion circuit,
Figure 4    shows a block diagram of an NDHD conversion circuit,
Figure 5    illustrates the lines and fields used for detecting moving and edge pixels,
Figure 6    shows a horizontal edge detector,
Figure 7    illustrates the expansion of motion region according to moving and edge pixels, and
Figure 8    shows a post-filtering window.

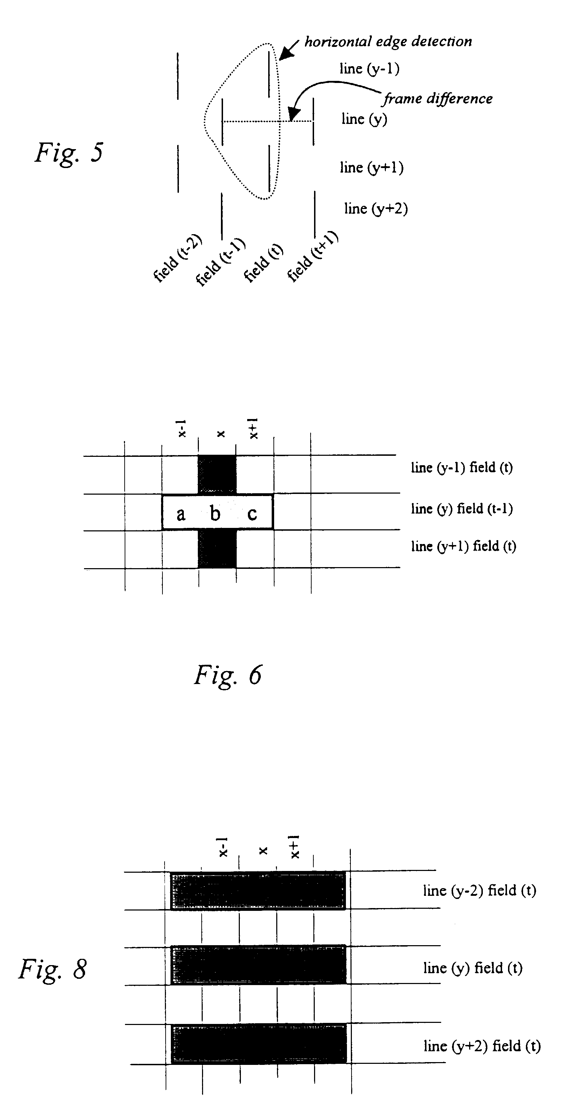

Now referring to Figure 5, in which it is considered same positions at different moments of time. The video signal is interlaced. When the field t-2 is swept, the pixel information will be in the same horizontal position of lines y-1 and y+1, one below the other in the figure. During the next field t-1 it is swept new samples for lines y and y+2, between the ones mentioned above. Again, during the next field it is swept samples for lines y-1 and y+1 in the same horizontal positions as during the field t-2. In a corresponding manner, during the field t+1 it is swept the same positions as during the field t-1. In Figure 5, the "frame difference" arrow refers to the difference across the image, ie. how the pixel value in one position is changed after a time the duration of which corresponds to the image frequency. According to the first phase of the invention it is calculated for all samples the above-mentioned frame difference signal, and it is found the locations in which the signal exceeds a preset threshold value kl. These positions will be interpreted moving and they are called moving pixels (moving_pixel).

Thus, a mathematical expression for the first phase is:

if $|s(x,y,t\text{-}1) - s(x,y,t\text{+}1)| \geq k_1$, then m(x,y,t) = moving_pixel,

where s(x,y,t) is the luminance value of the pixel in field t, line y, position x, and m(x,y,t) is the motion information associated with this pixel.

A suitable threshold value $k_1$ is about 12.

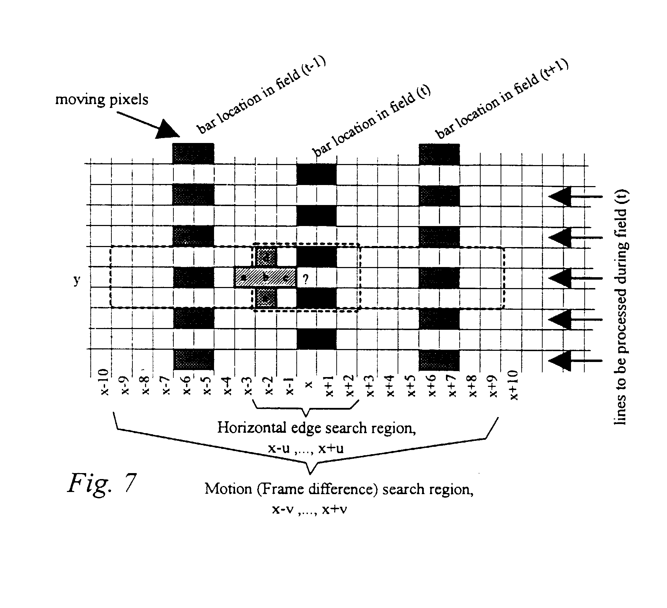

In the second phase, which in practice is performed simultaneously with phase 1, it is found the horizontal edge locations in an image formed by two successive fields. Edges produced by motion as well as real horizontal edges are detected as edges. The pixels are called edge pixels (edge_pixel). The cross detection mask shown in Figure 6 is used as detector. Samples from the same horizontal position from two successive lines y-1 and y+1 in field t are taken to the top and bottom rows of the mask, each comprising one sample location. To the middle row it is taken three successive samples of the previous field t-1 swept between these lines, the middlemost of which has the same horizontal position as the samples in the top and bottom rows of the cross. With the detector it is found the maximum for the values: the difference of the top and middle samples in the window, the difference of the middle and bottom samples in the window. From the maximum value it is subtracted the difference of the maximum sample and minimum sample in the middle row. The result is marked hor_value. If this value exceeds a preset threshold value $k_2$, it is interpreted an edge pixel.

Mathematically, the above is expressed:

$$hor\_value = \max[|s(x,\ y\text{-}1,\ t) - s(x,\ y,\ t\text{-}1)|, |s(x,\ y,\ t\text{-}1) - s(x,\ y\text{+}1,\ t)|] - $$

$$range[s(x\text{-}1,\ y,\ t\text{-}1),\ s(x,\ y,\ t\text{-}1),\ s(x\text{+}1,\ y,\ t\text{-}1)]$$

**if**$(hor\_value \geq k_2)$

**then** $e(x,\ y,\ t) = edge\_pixel$,
    where

    max[ ] is the maximum of inputs,
    range[ ] is the difference of the maximum and minimum of inputs,
        $e(x,\ y,\ t)$ is the edge information associated with location $x,\ y,\ t$.

As a result of the performed first and second phases it is obtained for each pixel preliminary information about whether it is a moving or an edge pixel. The third phase is to expand the motion region. It is expanded according to the moving and edge pixels. The expansion is described with reference to Figure 7. In the figure, a question mark (?) marks the location the motion information of which is to be examined. It is counted the number of moving pixels [m(x, y,t) = = moving pixel] on one and the same line in the region x-$v$, ..., x+$v$. The resulting number is marked "count$_{motion\_pixel}$". In addition, it is counted the number of edge pixels [e(x,y,t) = = edge_pixel] in the region x-$u$,..., x+$u$. The result is marked "count$_{edge\_pixel}$". If simultaneously the number of moving pixels and the number of edge pixels in the region is greater than 1, the pixel is considered moving. A suitable value for $v$ is about 15 and for $u$, about 2.

Mathematically expressed, the expansion in the region is:

**if**(count$_{motion\_pixel}$ > 1) **AND** (count$_{edge\_pixel}$ > 1)

**then** m(x,y,t) = motion_pixel.

In Figure 7, a question mark (?) marks the location the motion information of which is to be examined. In the figure it is again considered the case of the vertical bar. During the field (t-1) the bar is in the left, at the location x-6/x-5, and it moves to the right, and is during the field (t+1) at the location x+6/x+7. These locations are well detected by means of the difference signal, and they have been marked as moving pixels. At the same time the edge pixels have been examined by means of an operator according to Figure 6, and it has been observed that there is an edge pixel at the location x/x+1. Then the motion region can be expanded by connecting it to the edge pixels.

The critical value is $v$, which indicates how far motion is searched for. In practice, movement greater than 15 pixels/field is rare, and that is why it has been selected as limit. Thus, by changing the value of $v$ it is controlled how quick a movement it is possible to detect but also how wide the region in which incorrect detection may occur.

Now referring to Figure 8. Motion information, like other control information, must generally be improved, or post-processed. That means filling out single holes or removing single pixels. In the post-processing it is examined regions of a selected size, e.g. 5x3 regions. Post-filtering of the motion detection described above is done on three successive lines of one field; in the figure, on successive lines y-2, y, y+2 of field t. In the window, the size of which may be e.g. 5*3, it is examined how many moving pixels there are in it. If there are less moving pixels than the preset condition, then the middlemost pixel in the window is considered not moving. If, in the case presented by Figure 8, in which there are 15 samples in the window, there are e.g. three or less moving pixels, then the middlemost pixel examined is not moving.

Post-processing done in a 5*3 window can thus be divided into the following phases:

1. In the 5*3 window it is counted the total number of moving pixels ($count_{tot}$) in the whole window (max = 15).

2. If the $count_{tot}$ is 0 or 1, location x,y is removed from the moving pixels group.

3. If the $count_{tot}$ is 5 and the moving pixels are in the same row (if window width is 5), then location x,y is removed from the moving pixels group.

Otherwise, location x,y can be considered a moving pixel.

Phase 2 of this post-filtering improves the noise tolerance of the system and reduces coupling errors. In phase 3, all one-line-high moving lines are converted into non-moving. This reduces expansion of the motion region into static regions. It should also be noted that the processing mentioned above expands the motion region always when the conditions are met and location x,y was not originally a moving pixel.

It is also possible to implement the invention within the scope of the invention in ways other than the one described above. So, the detection of a horizontal edge may be performed in a way different from the one presented here. It may be done in the way shown in the patent application FI-921676, which deals with an application similar to the one illustrated in Figure 4, or another known edge detector, say, a Sobel detector, may be used for it. Of course, post-processing can be done in a way different from the one discussed above, but yet in a manner such that all single moving lines are converted into static ones. Thus, in the vertical direction there has to be movement on at least two successive lines for the middle point in the window shown in Figure 8 to be interpreted moving. All threshold values are selectable and it is possible to make them adaptively controlled.

## Claims

1. A method for detecting motion in an interlaced digital video signal, with which method it is obtained information about whether there occurs in the field (t) motion at the examined location (x,y,t) of a new line (y) generated between two lines (y-1, y+1) successive in the vertical direction,
   **characterized** in that for each examined location (x,y,t):

   a) it is calculated the difference signal between the pixel in the preceding field (t-1) in the position (x,y) of the location examined and the pixel in the next field (t+1) in the position (x,y) of the location examined, and the difference signal is compared to a preset first threshold value, and if the difference signal exceeds the first threshold value, the location (x,y,t) examined is called a moving pixel,
   b) it is found in the image constituting the field (t) and the preceding field (t-1) the horizontal edge locations, and if there is an edge at the location (x,y,t) examined, the location is called an edge pixel,
   c) it is counted in a first region (x-$v$, ..., x+$v$) the number of moving pixels on the new line (y) generated and, in a second region (x-$u$, ..., x+$u$), the number of edge pixels, and if simultaneously the number of moving pixels and the number of edge pixels is greater than a preset second threshold value, it is interpreted that there is motion associated with the location (x,y,t) examined.

2. The method of claim 1, **characterized** in that the first threshold value is about 12.

3. The method of claim 1, **characterized** in that the horizontal edge locations at the location (x,y,t) examined are determined by calculating the value HOR as follows:

$$HOR = max[|s(x,y-1,t)-s(x,y,t-1)|, |s(x,y,t-1)-s(x,y+1,t)|] -$$

$$range[s(x-1,y,t-1), s(x,y,t-1), s(x+1,y,t-1)]$$

where

max[ ] is the maximum of inputs,
range[ ] is the difference of the maximum and minimum of inputs,

and if the value HOR is greater than a preset third threshold value, the location examined is called an edge pixel.

4. The method of claim 3, **characterized** in that the third threshold value is about 8.

5. The method of claim 1, **characterized** in that the first region comprises 15 locations and the second region comprises 2 locations on both sides of the location (x,y,t) examined and the second threshold value is 1.

6. The method of claim 1, **characterized** in that when motion information has been obtained for each location (x,y, t) examined, it is performed post-processing in which the motion information of the examined location is compared to the motion information of the examined locations in the neighbourhood.

7. The method of claim 6, **characterized** in that 3 successive new lines are taken simultaneously to an M*3 window, there being then, in each row of the window, M pieces of motion information associated to successive locations of one line, and the final motion information of the examined location (x,y,t) in the center of the window is determined as follows: it is calculated how many locations in each row of the window indicate motion associated to the location, it is counted the number of the locations in the window to which motion is associated, and if the number is 0 or 1 or if the number is M in one row, then it is interpreted that no motion is associated to the location (x,y,t) examined.

**Patentansprüche**

1. Verfahren zum Erfassen von Bewegung in einem digitalen Videosignal mit Zeilensprung, mit dem Informationen darüber erhalten werden, ob es in dem Halbbild (t) eine Bewegung an der untersuchten Stelle (x,y,t) einer neuen Zeile (y) gibt, die zwischen zwei in senkrechter Richtung aufeinanderfolgenden Zeilen (y-1, y+1) generiert wird, **dadurch gekennzeichnet**, daß für jede untersuchte Stelle (x,y,t):

   a) das Differenzsignal zwischen dem Bildpunkt im vorhergehenden Halbbild (t-1) an der Position (x,y) der untersuchten Stelle und dem Bildpunkt im nächsten Feld (t+1) an der Position (x,y) der untersuchten Stelle berechnet wird, um das Differenzsignal mit einem voreingestellten ersten Schwellenwert verglichen wird, und wenn das Differenzsignal den ersten Schwellenwert überschreitet, die untersuchte Stelle (x,y,t) als beweglicher Bildpunkt bezeichnet wird,
   b) in dem das Feld (t) und das vorhergehende Halbbild (t-1) ausmachenden Bild die waagerechten Kantenstellen gefunden werden, und wenn es eine Kante an der untersuchten Stelle (x,y,t) gibt, die Stelle als Kantenbildpunkt bezeichnet wird,
   c) in einer ersten Zone (x-v, ..., x+v) die Zahl der beweglichen Punkte auf der generierten neuen Zeile (y) und in einer zweiten Zone (x-u, ..., x+u) die Zahl von Kantenbildpunkten gezählt wird, und wenn die Zahl der beweglichen Bildpunkte und die Zahl der Kantenbildpunkte gleichzeitig größer ist als ein voreingestellter zweiter Schwellenwert, dies so interpretiert wird, daß es eine Bewegung in Zusammenhang mit der untersuchten Stelle (x,y,t) gibt.

2. Verfahren nach Anspruch 1, **dadurch gekennzeichnet**, daß der erste Schwellenwert etwa 12 ist.

3. Verfahren nach Anspruch 1, **dadurch gekennzeichnet**, daß die waagerechten Kantenstellen an der untersuchten Stelle (x,y,t) durch Berechnen des Wertes HOR wie folgt ermittelt werden:

$$HOR = max[ls(x,y-1,t)-s(x,y,t-1), ls(x,y,t-1)-s(x,y+1,t)l] -$$

$$Bereich [s(x-1,y,t-1), s(x,y,t-1), s(x+1,y,t-1)]$$

wobei

   max [  ] der Höchstwert der Eingänge, Bereich [  ] die Differenz zwischen dem Höchstwert und dem Mindestwert der Eingänge ist,

und wenn der HOR-Wert größer ist als ein voreingestellter dritter Schwellenwert, die untersuchte Stelle als Kantenbildpunkt bezeichnet wird.

**4.** Verfahren nach Anspruch 3, **dadurch gekennzeichnet**, daß der dritte Schwellenwert etwa 8 ist.

**5.** Verfahren nach Anspruch 1, **dadurch gekennzeichnet**, daß die erste Zone 15 Stellen und die zweite Zone 2 Stellen auf beiden Seiten der untersuchten Stelle (x,y,t) umfaßt und der zweite Schwellenwert 1 ist.

**6.** Verfahren nach Anspruch 1, **dadurch gekennzeichnet**, daß, wenn Bewegungsinformationen für jede untersuchte Stelle (x,y,t) erhalten wurden, eine Nachbearbeitung durchgeführt wird, bei der die Bewegungsinformationen der untersuchten Stelle mit den Bewegungsinformationen der untersuchten Stellen in der Nachbarschaft verglichen werden.

**7.** Verfahren nach Anspruch 6, **dadurch gekennzeichnet**, daß drei aufeinanderfolgende neue Zeilen gleichzeitig auf ein M*3 Fenster übertragen werden, wobei dann in jeder Reihe des Fensters M Teile an Bewegungsinformationen in Verbindung mit aufeinanderfolgenden Stellen einer Zeile vorhanden sind, und die endgültigen Bewegungsinformationen der untersuchten Stelle (x, y, t) in der Mitte des Fensters wie folgt ermittelt werden: Es wird berechnet, wie viele Stellen in jeder Reihe des Fensters eine Bewegung in Zusammenhang mit der Stelle anzeigen; es werden die Stellen in dem Fenster gezählt, mit denen Bewegung assoziiert wird, und wenn die Zahl 0 oder 1 ist, oder wenn die Zahl in einer Reihe M ist, dann wird sie so interpretiert, daß es keine Bewegung in Zusammenhang mit der untersuchten Stelle (x,y,t) gibt.

## Revendications

**1.** Procédé permettant de détecter le mouvement dans un signal vidéo numérique entrelacé, avec lequel on recueille des informations pour savoir s'il se produit un mouvement dans le champ (t), à l'emplacement (x,y,t) étudié d'une nouvelle ligne (y) générée entre deux lignes (y-1, y+1) successives suivant la direction verticale, caractérisé en ce que pour chaque emplacement (x,y,t) étudié :

a) on calcule le signal différentiel entre le pixel du champ précédent (t-1) à la position (x,y) de l'emplacement étudié et le pixel du champ suivant (t+1) à la position (x,y) de l'emplacement étudié, et le signal différentiel est comparé à une première valeur de seuil préréglée (x,y) et si le signal différentiel excède la première valeur de seuil, l'emplacement (x,y,t) étudié est appelé pixel animé,
b) on trouve dans l'image constituant le champ (t) et le champ précédent (t-1) les emplacements des bords horizontaux et, s'il y a un bord situé à l'emplacement (x,y,t) étudié, l'emplacement est appelé pixel de bord,
c) on compte dans une première région (x-v, ..., x+v) le nombre de pixels animés sur la nouvelle ligne (y) générée et, dans une seconde région (x-u, ...,x+u), le nombre de pixels de bord, et si le nombre de pixels animés et le nombre de pixels de bord sont simultanément supérieurs à une seconde valeur de seuil préréglée, on estime qu'il existe un mouvement associé à l'emplacement (x,y,t) étudié.

**2.** Procédé selon la revendication 1, caractérisé en ce que la première valeur de seuil est environ 12.

**3.** Procédé selon la revendication 1, caractérisé en ce que les emplacements de bord horizontaux situés à l'emplacement (x,y,t) étudié sont déterminés en calculant la valeur HOR suivante :

$$\text{HOR} = \max \left[ |s(x,y-1,t)-s(x,y,t-1)|,\ |s(x,y,t-1)-s(x,y+1,t)| \right] -$$

$$\text{plage} \left[ s(x-1,y,t-1),\ s(x,y,t-1),\ s(x+1,y,t-1) \right]$$

dans laquelle max [ ] représente le maximum d'entrées,
plage [ ] représente la différence du maximum et du minimum d'entrées,

et si la valeur HOR est supérieure à une troisième valeur de seuil préréglée, l'emplacement étudié est appelé pixel de bord.

**4.** Procédé selon la revendication 3, caractérisé en ce que la troisième valeur de seuil est environ 8.

**5.** Procédé selon la revendication 1, caractérisé en ce que la première région comprend 15 emplacements et la seconde en comprend 2 des deux côtés de l'emplacement (x,y,t) étudié et en ce que la seconde valeur de seuil est égale à 1.

6. Procédé selon la revendication 1, caractérisé en ce que, lorsque les informations de mouvement ont été recueillies pour chaque emplacement (x,y,t) étudié, on procède à un post-traitement dans lequel les informations de mouvement de l'emplacement étudié sont comparées aux informations de mouvement des emplacements étudiés dans le voisinage.

7. Procédé selon la revendication 6, caractérisé en ce que 3 nouvelles lignes successives sont amenées simultanément à une fenêtre M*3, M éléments d'informations de mouvement associés à des emplacements successifs d'une ligne se trouvant à ce moment-là, sur chaque rangée de la fenêtre, et en ce que les informations finales de mouvement de l'emplacement (x,y,t) étudié au centre de la fenêtre sont déterminées comme suit : on calcule combien d'emplacements sur chaque rangée de la fenêtre indiquent un mouvement associé à l'emplacement, on calcule le nombre d'emplacements de la fenêtre auxquels un mouvement est associé et si le nombre est égal à 0 ou à 1 ou si le nombre est M sur une rangée, on estime alors qu'aucun mouvement n'est associé à l'emplacement (x,y,t) étudié.

*3D spatio-temporal solid*          *2D surfaces*

y

t          x

t+1

t+2

time
(fields)

t

t+1

t+2

*Fig. 1*

*2D field-surfaces*

field
(t-1)

field
(t)

field
(t+1)

*Frame
difference
signal*

motion / field period

Detected
motion

Undetected
motion

*Adaptively
interpolated
frame*

Residual
motion
artefacts

*Fig. 2*

9

## Fig. 3

*Fig. 3*

## Fig. 4

*Fig. 4*

*Fig. 5*

horizontal edge detection

line (y-1)

frame difference

line (y)

line (y+1)

line (y+2)

field (t-2) field (t-1) field (t) field (t+1)

$\overline{x\text{-}}$   x   $\overline{x\text{+}}$

line (y-1) field (t)

a   b   c   line (y) field (t-1)

line (y+1) field (t)

*Fig. 6*

$\overline{x\text{-}}$   x   $\overline{x\text{+}}$

line (y-2) field (t)

*Fig. 8*

line (y) field (t)

line (y+2) field (t)

Fig. 7